# EUROPEAN PATENT APPLICATION

(11) **EP 4 632 447 A2**
(43) Date of publication of application: **15.10.2025**
(21) Application number: 25159349.7
(22) Date of filing: 21.02.2025
(51) Int. Cl.: G02B 5/18, G02B 5/32, G02B 27/00, G02B 27/01

(54) **VOLUME HOLOGRAPHIC GRATING, METHOD FOR FORMULATING GRATING VECTOR DISTRIBUTION THEREOF, AND METHOD AND APPARATUS FOR MANUFACTURING VOLUME HOLOGRAPHIC GRATING**

(30) Priority: 08.04.2024 CN 202410416390
(71) Applicant: Nika Optics (Tianjin) Co., Ltd., Tianjin (CN)
(72) Inventor: YANG, Mu, Tianjin (CN); DU, Youcheng, Tianjin (CN)
(74) Representative: Herrero & Asociados, S.L.

(57) **Abstract**

The present invention relates to a volume holographic grating, a method for formulating a grating vector distribution formulation thereof, and a method and apparatus for manufacturing the volume holographic grating. The grating vector distribution is estimated by sampling a position of an eye movement range effective region of a plurality of sub-fields of view and a grating vector, matching with Bragg diffraction conditions, of a ray thereof, without considering the diffraction of ineffective rays that ultimately enter beyond the eye movement range, such that most of the effective rays with different incident angles have higher diffraction efficiency on the volume holographic grating, which ensures the overall brightness uniformity of the output beams and extend the field of view.

## Description

### TECHNICAL FIELD

The present invention relates to the technical field of augmented reality waveguide display, and particularly to a volume holographic grating, a method for formulating a grating vector distribution thereof, and a method and apparatus for manufacturing the volume holographic grating.

### BACKGROUND

The optical waveguide display technology is a mainstream method to realize highly-transparent and lightweight augmented reality glasses, and has a great potential in extending a field of view and further enhancing a display effect. Rays are conducted in a transparent optical waveguide by total reflection, and are controlled in ray input, output, deflecting, exit pupil expansion, energy distribution thereof by coupling elements such as gratings arranged in the optical waveguide, so as to guide an image light signal into human eyes. The volume holographic grating serves as a type of Bragg diffraction element, its diffraction energy is mostly in zero-order diffraction and first-order diffraction, and a ratio of zero-order diffraction to first-order diffraction may be adjusted through regulating grating parameters. Therefore, optical waveguide with volume holographic grating as a coupling element has special advantages in enhancing light effect and reducing light leakage.

It is well known that the field of view and the eye movement range of optical waveguide display are important indicators for evaluating the performance of optical waveguide. In order to extend the field of view and the eye movement range, and to enhance the uniformity of the field of view and the eye movement range, grating parameters are required to locally regulated and changed spatially. Compared with surface microstructure gratings, the volume holographic grating has advantages of single structural form, and regulatable variable parameters including thickness, refractive index modulation and grating vector.

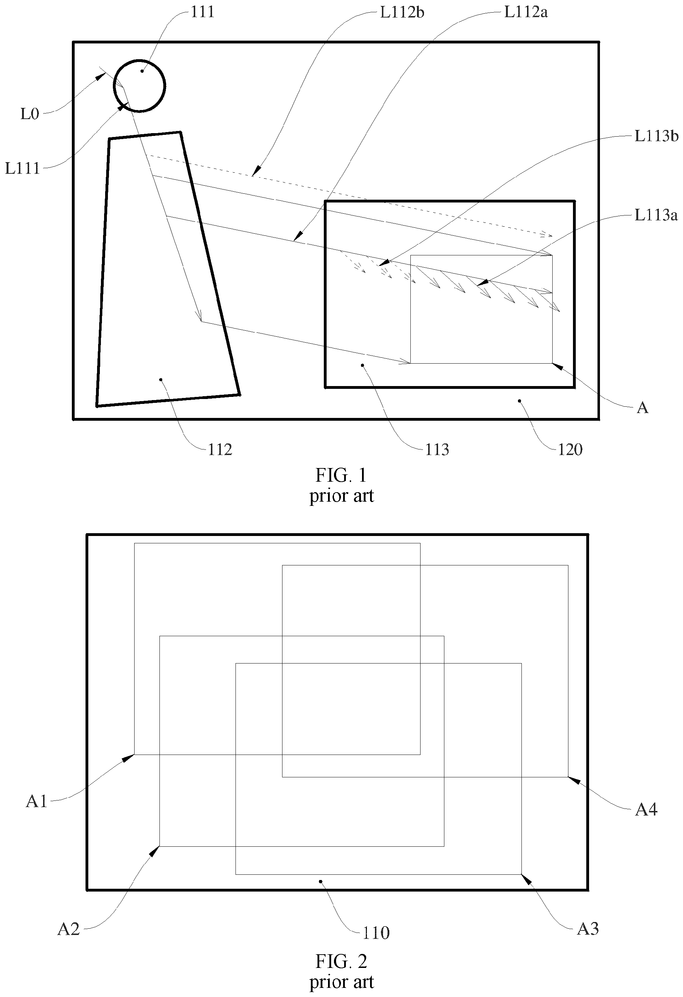

In augmented reality waveguide display, the eye movement range is a range in which human eyes seeing the complete field of view image can move, and the human eyes can only see part of the field of view image outside the eye movement range. Taking a two-dimensional pupil expansion waveguide as an example, as shown in FIG. 1, the waveguide structure consists of two layers of transparent glass substrate 120, and a volume holographic grating 110 arranged therebetween which includes a coupling-in grating 111, a deflecting grating 112, and a coupling-out grating 113. A beam of ray with a specific input angle is coupled, via the coupling-in grating 111 at the specific input angle α from a micro-projection optical machine, into the waveguide for transmission in total reflection, and extended in two directions through the deflecting grating 112, and ultimately output from the waveguide at angles that are in one-to-one correspondence with the input angles via coupling by the coupling-out grating 113, in which merely a part of the ray enters the eye movement range to be received by the human eyes ultimately to form an image. The region covered by the part of ray entering the eye movement range on the volume holographic grating 110 is defined as an eye movement range effective region of the ray with the particular input angle on the volume holographic grating. In FIG. 1, the ray output from the micro-projection optical machine is indicated as L0, the ray coupled into the waveguide by the coupling-in grating 111 is indicated as L111, the effective ray ultimately entering the eye movement range after extended by the deflecting grating 112 is indicated as L112a, the ineffective ray ultimately beyond the eye movement range after extended by the deflecting grating 112 is indicated as L112b, the effective ray ultimately entering the eye movement range after coupled out of the waveguide by the coupling-out grating 113 is indicated as L113a, and the ineffective ray ultimately beyond the eye movement range after coupling out of the waveguide by the coupling-out grating 113 is indicated as L113b.

Since the rays of different input angles α, α₁, α₂, α₃, α₄ enter the eye movement range at different angles from the waveguide via the coupling-out grating 113, the eye movement range effective region A, A₁, A₂, A₃, A₄ of rays with different input angles α, α₁, α₂, α₃, α₄ on the volume holographic grating 110 is also different. The eye movement range effective region of the rays with different input angles on the volume holographic grating 110 is as shown in FIG. 2. The rays with different input angles α, α₁, α₂, α₃, α₄ often overlap with each other in the eye movement range effective region A, A₁, A₂, A₃, A₄ on the volume holographic grating 110, considering that grating vectors, matching with the Bragg diffraction conditions, of the rays with different input angles are different, the grating vector at different positions of the volume holographic grating 110 needs to support the diffraction of the rays with many different input angles, therefore, the grating vector distribution cannot be known directly. In addition, single parameter regulation such as refractive index modulation or thickness regulation is not beneficial for controlling ray transmission with high degree of freedom, thereby failing to realize a large field of view, uniformity of field of view and the eye movement range of the optical waveguide display.

Moreover, these volume holographic gratings with spatially variable parameters are difficult to manufacture, especially regulation of the grating vector, which should meet the requirement of constant surface component of the grating vector under basic principles of waveguide display, simultaneously the grating vector variation range should support the rays at all angles in the field of view to match with the Bragg diffraction conditions. Therefore, both double-beam exposure and mask exposure are very demanding on the exposure apparatus and exposure process.

### SUMMARY

The present invention provides a method for formulating a grating vector distribution target, which can extend an angular bandwidth of a volume holographic grating, achieving extended field of view of an optical waveguide, and enhanced uniformity of the field of view and the eye movement range.

In a first aspect of the present invention, a method for formulating a grating vector distribution target is provided, and the method includes the following steps:
sampling a plurality of sub-fields of view;
recording a position of an eye movement range effective region of each sub-view field, and calculating a grating vector, matching with Bragg diffraction conditions, of a ray of each sub-field of view;
estimating a grating vector distribution of a volume holographic grating according to the position of the eye movement range effective region of the plurality of sub-fields of view and the grating vector, matching with the Bragg diffraction conditions, of the ray of the plurality of sub-fields of view; and
determining a grating vector distribution of the volume holographic grating according to the estimated grating vector distribution and according to the principle that a grating vector at a coupling tail end of the eye movement range effective region of each sub-field of view precisely matches with the Bragg diffraction conditions.

In the present invention, the grating vector distribution is estimated by sampling the position of the eye movement range effective region of a plurality of sub-fields of view and the grating vector, matching with the Bragg diffraction conditions, of the ray thereof, without considering diffraction of ineffective ray that ultimately enters beyond the eye movement range, such that most of the effective rays with different incident angles have higher diffraction efficiency on the volume holographic grating, so as to ensure the overall brightness uniformity of the output beams and extend the field of view. On this basis, the grating vector, precisely matching with the Bragg diffraction conditions, of the ray of each sub-field of view is placed at a coupling tail end of the eye movement range effective region, such that the diffraction efficiency can be maximized at the coupling tail end as much as possible, which is beneficial to enhancing the brightness uniformity of effective rays output by each sub-field of view from different positions of the volume holographic grating, thereby enhancing the uniformity of the field of view and the uniformity of the eye movement range.

In a second aspect of the present invention, a volume holographic grating is provided. A grating vector distribution of the volume holographic grating is estimated by sampling a position of an eye movement range effective region of a plurality of sub-fields of view and a grating vector, matching with Bragg diffraction conditions, of a ray thereof, where a grating vector at a coupling tail end of the eye movement range effective region of each sub-field of view precisely matches with the Bragg diffraction conditions. The grating vector distribution has at least one change direction, the at least one change direction is the same as the direction of a surface component of the grating vector, and the surface component of the grating vector at different positions remains constant; the sub-field of view refers to a collection of rays with the same incident angle that ultimately enters the entire field of view; and the eye movement range effective region refers to a region covered by the rays that ultimately enter the eye movement range on the volume holographic grating.

In the present invention, the grating vector distribution is estimated by sampling the position of the eye movement range effective region of a plurality of sub-fields of view and the grating vector, matching with the Bragg diffraction conditions, of the ray thereof, without considering diffraction of ineffective rays that ultimately enter beyond the eye movement range, such that most of the effective rays with different incident angles have higher diffraction efficiency on the volume holographic grating, so as to ensure the overall brightness uniformity of the output beam, and to extend the field of view. On this basis, the grating vector, precisely matching with the Bragg diffraction conditions, of the ray of each sub-field of view is placed at a coupling tail end of the eye movement range effective region, such that the diffraction efficiency can be maximized at the coupling tail end as much as possible, which is beneficial to enhancing the brightness uniformity of effective rays output by each sub-field of view from different positions of the volume holographic grating, thereby enhancing the uniformity of the field of view and the uniformity of the eye movement range.

The volume holographic grating may be a coupling-in grating, a coupling-out grating, a deflecting grating or a combination of any two or three of the coupling-in grating, the deflecting grating and the coupling-out grating, i.e., the volume holographic grating may include a coupling-in region, a deflecting region and/or a coupling-out region. Preferably, the volume holographic grating includes a coupling-in region and a coupling-out region. More preferably, the volume holographic grating includes a coupling-in region, a deflecting region and a coupling-out region.

In a third aspect of the present invention, a method for manufacturing the above volume holographic grating is provided. The method includes the following steps:
discretizing a grating vector distribution into a plurality of grating units arranged at least in the direction of a surface component of a grating vector thereof, and the grating vector at different positions of the same grating unit remains constant;
selecting or making a mask grating with a surface period being equal to the surface period of the volume holographic grating to be made, such that the surface component of the grating vector of the volume holographic grating to be made is parallel to a surface component of a grating vector of the mask grating;
calculating an incident angle of a collimated beam corresponding to each grating unit according to the grating vector of the grating unit and the grating vector of the mask grating; and
switching to an exposure position and the incident angle of the collimated beam corresponding to one certain grating unit, such that the zero-order light and the first-order light generated by diffraction of the collimated beam through the mask grating may interfere with each other on the volume holographic photosensitive material, to expose each grating unit in sequence.

In the present invention, the volume holographic grating to be made and the grating vector distribution thereof are discretized into a plurality of grating units with a specific grating vector, thereby avoiding the need for a high-precision exposure apparatus to match with customized beam shaping elements or customized mask gratings, and reducing the making difficulty and cost. At the same time, the zero-order light and the first-order light used for sequentially exposing each grating unit are generated in sequence through the diffraction of the collimated beam by the mask grating, and the incident angle of the collimated beam can be adjusted to adjust the incident angles of the zero-order light and the first-order light at the same time, with low complexity and controllable cost compared with other methods.

In a fourth aspect of the present invention, an apparatus for manufacturing the above volume holographic grating is provided. The apparatus includes a collimated light generating mechanism, a mask grating and a light-transmitting carrier arranged in sequence, and further includes a first switching mechanism and a second switching mechanism acting simultaneously. The light-transmitting carrier is configured to carry a volume holographic photosensitive material, the mask grating has the same surface period as the grating unit, a surface component of a grating vector of the mask grating is parallel to a surface component of a grating vector of the grating unit, the collimated light generating mechanism is configured to generate a collimated beam that can be incident on the mask grating, the collimated beam is diffracted by the mask grating into zero-order light and one-order light, and the zero-order light and the one-order light pass through the light-transmitting carrier and are subjected to interferential exposure on the volume holographic photosensitive material. The first switching mechanism is configured to switch the exposure position, such that the zero-order light and the first-order light just only cover the grating unit to be exposed, and the second switching mechanism is configured to switch the incident angle of the collimated beam, such that the incident angle of the collimated beam corresponds to the grating unit to be exposed.

In the present invention, the zero-order light and the first-order light used for sequentially exposing each grating unit are generated through diffraction of the collimated beam by the mask grating, and the incident angle of the collimated beam can be adjusted to adjust the incident angles of the zero-order light and the first-order light at the same time, with low complexity and controllable cost compared with other methods.

In a fifth aspect of the present invention, an augmented reality waveguide structure applying the above volume holographic grating is provided. The augmented reality waveguide structure includes two layers of transparent substrate, and the above volume holographic grating arranged between the two layers of substrate. The volume holographic grating may be a coupling-in grating, a coupling-out grating, a deflecting grating, or a combination of any two or three of the coupling-in grating, the deflecting grating and the coupling-out grating, i.e., the volume holographic grating may include a coupling region, a deflecting region and/or a coupling-out region. Preferably, the volume holographic grating includes a coupling-in region and a coupling-out region. More preferably, the volume holographic grating includes a coupling-in region, a deflecting region and a coupling-out region.

In the present invention, the volume holographic grating provided herein is taken as the coupling-in grating and/or the coupling-out grating, such that the field of view is extended and the uniformity of the field of view and the uniformity of the eye movement range are enhanced.

Compared with the prior art, the present invention has the following beneficial effects. In the present invention, the grating vector distribution is estimated by sampling the position of the eye movement range effective region of a plurality of sub-fields of view and the grating vector, matching with the Bragg diffraction conditions, of the ray thereof, without considering the diffraction of the ineffective rays that ultimately enter beyond the eye movement range, such that most of the effective rays with different incident angles have higher diffraction efficiency on the volume holographic grating, so as to ensure the overall brightness uniformity of the output beam and extend the field of view. On this basis, the grating vector, precisely matching with the Bragg diffraction conditions, of the ray of each sub-field of view is placed at the coupling tail end of the eye movement range effective region, such that the diffraction efficiency can be maximized at the coupling tail end as much as possible, which is beneficial to enhancing the brightness uniformity of the effective ray output by each sub-field of view from different positions of the volume holographic grating, thereby enhancing the uniformity of the field of view and the uniformity of the eye movement range.

### BRIEF DESCRIPTION OF DRAWINGS

The accompanying drawings are merely for exemplary illustration and are not to be construed as a limitation of the present invention; in order to better illustrate the present invention, certain parts of the accompanying drawings will be omitted, enlarged, or reduced, and do not represent the dimensions of actual products; and those skilled in the art should understand that certain well-known structures and their descriptions in the accompanying drawings may be omitted.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs.

In the drawings:
FIG. 1 is a schematic diagram of transmission of a ray with an incident angle of α in a two-dimensional pupil expansion waveguide structure according to a prior art;
FIG. 2 is a schematic diagram of an eye movement range effective region of rays with different incident angles on a volume holographic grating according to a prior art;
FIG. 3 is a flow chart of a method for formulating a grating vector distribution target according to an embodiment of the present invention;
FIG. 4 is a schematic diagram of ray transmission of a volume holographic grating, in which a grating vector changes spatially, according to an embodiment of the present invention;
FIG. 5 is a flow chart of a method for manufacturing a volume holographic grating according to an embodiment of the present invention;
FIG. 6 is a schematic diagram of a volume holographic grating consisting of a plurality of grating units according to an embodiment of the present invention;
FIG. 7 is a schematic diagram of an apparatus for manufacturing a volume holographic grating according to an embodiment of the present invention;
FIG. 8 is a top view of the apparatus shown in FIG. 7;
FIG. 9 is a schematic diagram of a waveguide structure using the volume holographic grating shown in FIG. 4;
FIG. 10 is a diffraction efficiency curve of a mask grating as a function of angle; and
FIG. 11 is a diffraction efficiency curve of a volume holographic grating with a spatially varying grating vector obtained using the mask grating exposure shown in FIG. 10.

Reference signs: 110 volume holographic grating, 111 coupling-in grating, 112 deflecting grating, 113 coupling-out grating, 120 substrate, 220 mask, 221 mask grating, 230 light-transmitting carrier, L0 ray output from the micro-projection optical machine, L111 ray coupled into the waveguide by the coupling-in grating 111, L112a effective ray ultimately entering the eye movement range after extended by the deflecting grating 112, L112b ineffective ray ultimately entering beyond the eye movement range after extended by the deflecting grating, L113a effective ray ultimately entering the eye movement range after coupled out of the waveguide by the coupling-out grating 113, L113b ineffective ray ultimately entering beyond the eye movement range after coupled out of the waveguide by the coupling-out grating 113, L210 collimated beam, L2210 zero-order light, L2211 first-order light, A eye movement range effective region of the beam with an incident angle of α, A1 eye movement range effective region of the beam with an incident angle of α₁, A2 eye movement range effective region of the beam with an incident angle of α₂, A3 eye movement range effective region of the beam with an incident angle of α₃, A4 eye movement range effective region of the beam with an incident angle of α₄, *u* grating unit, r_{xoy} grating vector surface component, *e* coupling tail end.

### DETAILED DESCRIPTION

In order to make those skilled in the art better understand the present invention, the present invention is described in further detail below in conjunction with specific embodiments.

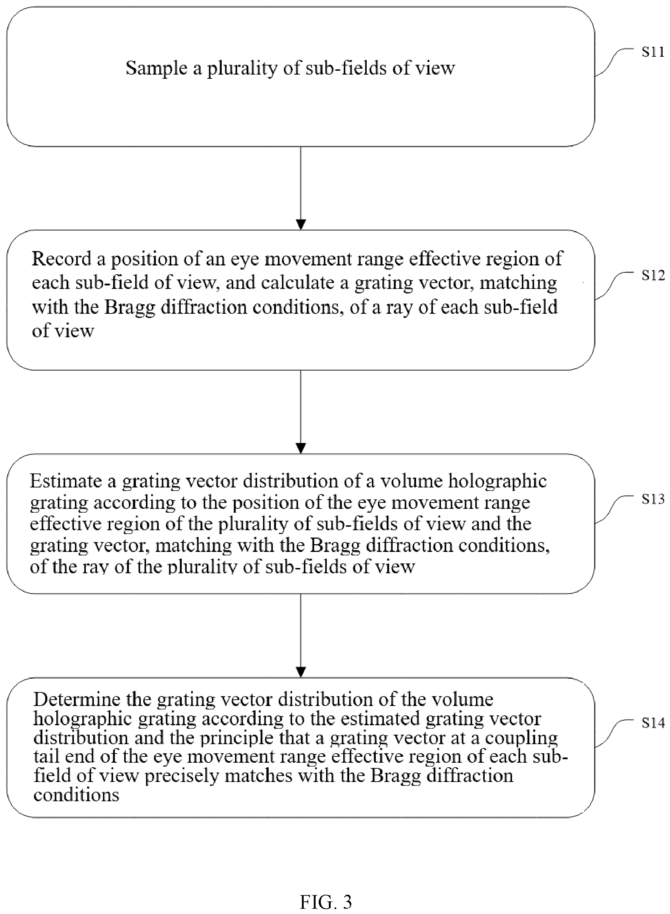

FIG. 3 shows a method for formulating a grating vector distribution target according to an embodiment of the present invention. The method may be used to formulate a grating vector distribution target for a volume holographic grating, in particular a volume holographic grating for an augmented reality waveguide display. The angular bandwidth of the volume holographic grating obtained therefrom is extended, which is conductive to extending the field of view of the optical waveguide, and enhancing the uniformity of the field of view and the uniformity of the eye movement range. As illustrated in FIG. 3, the method may include steps S11 to S14.

At S11, a plurality of sub-fields of view are sampled.

In a display system, the field of view is an included angle formed between an edge of a display and a line connecting human eyes, and a ray whose output angle is within the entire field of view can enter human eyes to form a complete field of view image. In other words, the complete field of view image is jointly presented by rays of different input angles entering the human eyes. For convenience of description, a collection of rays with the same incident angle that ultimately enter the entire field of view is defined in this invention as a sub-field of view. All the rays in the same sub-field of view have the same incident angle and the angles of the rays after diffraction by the volume holographic grating are also the same. The number of sampled sub-fields of view can be determined according to the size of the field of view designed by a display system. The sampling process can be performed using random sampling methods such as simple random sampling, systematic sampling, group sampling, stratified sampling, etc., or can be performed using non-random sampling methods such as accidental sampling, judgment sampling, equal sampling, snowball sampling, etc.

At S12, a position of an eye movement range effective region of each sub-field of view is recorded, and a grating vector, matching with Bragg diffraction conditions, of a ray of each sub-field of view is calculated.

Only a part of the ray in the sub-field of view enters the eye movement range after being diffracted by the volume holographic grating and is ultimately received by human eyes, and such part of the ray can be defined as an effective ray. For the convenience of description, in the present invention, the region covered by the rays that ultimately enter the eye movement range on the volume holographic grating is defined as the eye movement range effective region. Therefore, the region covered by the rays in the sub-field of view that ultimately enters the eye movement range on the volume holographic grating is the eye movement range effective region of the sub-field of view. Only the ray within this region will enter the eye movement range after being output, which contributes to a complete picture seen by the human eyes, and the region beyond that is ineffective for that sub-field of view. A grating vector is a vector with an amplitude of 2π/P and perpendicular to the grating surface, wherein P is an interval between adjacent grating surfaces, i.e., the grating period. The grating vector matching with the Bragg diffraction conditions can be calculated according to the Bragg diffraction conditions and the incident angle of the ray.

At S13, a grating vector distribution of the volume holographic grating is estimated according to the position of the eye movement range effective region of the plurality of sub-fields of view and the grating vector, matching with the Bragg diffraction conditions, of the rays of the plurality of sub-fields of view.

The grating vector distribution is the spatial variation of the grating vector, describing how the grating vector varies with a change of position of the eye movement range effective region, wherein the surface component of the grating vector refers to the component of the grating vector projected onto the entire volume holographic grating plane. For the optical waveguide display, the surface component should be constant on the entire volume holographic grating, i.e., the surface component of the grating vector at different positions remains constant, which ensures the one-to-one correspondence between the input angles and the output angles of the optical waveguide for different rays, i.e., ensures the accuracy of waveguide imaging.

The grating vector distribution has at least one change direction, and specifically may be a one-dimensional distribution or a two-dimensional distribution. The one-dimensional distribution has one change direction and the two-dimensional distribution has two change directions mutually perpendicular to each other. Generally speaking, at least one change direction in the grating vector distribution should be in the direction of the surface component of the grating vector. If the grating vector distribution is a one-dimensional distribution, its change direction is the same as the direction of the surface component of the grating vector r_{xoy}; and if the grating vector distribution is a two-dimensional distribution, one of its two change directions is the same as the direction of the surface component of the grating vector r_{xoy}.

In the present embodiment, the grating vector distribution of the volume holographic grating is estimated by the position of the eye movement range effective region of the plurality of sub-fields of view and the grating vector, matching with the Bragg diffraction conditions, of the ray thereof, without considering the diffraction of the ineffective ray that ultimately enters beyond the eye movement range, such that most of the effective rays with different incident angles have higher diffraction efficiency on the volume holographic grating, so as to ensure the overall brightness uniformity of the output beam and obtain extended field of view.

At S 14, the grating vector distribution of the volume holographic grating is determined according to the estimated grating vector distribution and the principle that a grating vector at a coupling tail end *e* of the eye movement range effective region of each sub-field of view precisely matches with the Bragg diffraction conditions.

In the present embodiment, based on the estimated grating vector distribution, for each sub-field of view, the grating vector that precisely matches with the Bragg diffraction conditions is placed at the coupling tail end *e* of the eye movement range effective region, such that the diffraction efficiency is maximized at the coupling tail end *e* as much as possible, which is beneficial to enhancing the brightness uniformity of the effective ray output by each sub-field of view from different positions of the volume holographic grating, thereby enhancing the uniformity of the field of view and the uniformity of the eye movement range.

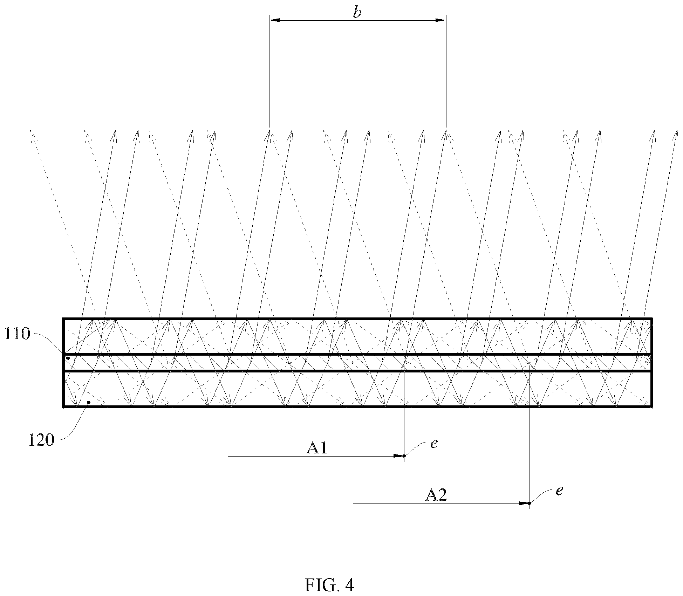

FIG. 4 shows a volume holographic grating (which refers to a first volume holographic grating) with a spatially variable grating vector according to an embodiment of the present invention. The volume holographic grating can be used in the optical waveguide display technology, and specifically can serve as a coupling-in grating, a deflecting grating and a coupling-out grating in augmented reality waveguide structures.

As shown in FIG. 4, the grating vector distribution of the volume holographic grating is estimated by sampling a position of an eye movement range effective region of a plurality of sub-fields of view and a grating vector, matching with Bragg diffraction conditions, of a ray thereof, and a grating vector at a coupling tail end *e* of the eye movement range effective region of each sub-field of view precisely matches with the Bragg diffraction conditions. The grating vector distribution has at least one change direction, the at least one change direction is the same as the direction of a surface component of the grating vector r_{xoy}, and the surface component of the grating vector at different positions remains constant. The sub-field of view refers to a collection of rays with the same incident angle that ultimately enter the entire field of view; and the eye movement range effective region refers to a region covered by the rays that ultimately enter the eye movement range on the volume holographic grating.

In the present embodiment, the grating vector distribution of the volume holographic grating is estimated by sampling the position of the eye movement range effective region of the plurality of sub-fields of view and the grating vector, matching with the Bragg diffraction conditions, of the ray thereof, without considering the diffraction of ineffective rays that ultimately enter beyond the eye movement range, such that most of the effective rays with different incident angles have higher diffraction efficiency on the volume holographic grating, so as to ensure the overall brightness uniformity of the outputted beams and extend the field of view. On this basis, the grating vector, precisely matching with the Bragg diffraction conditions, of the ray of each sub-field of view is placed at the coupling tail end *e* of the eye movement range effective region, such that the diffraction efficiency can be maximized at the coupling tail end *e* as much as possible, which is beneficial to enhancing the brightness uniformity of the effective ray output by each sub-field of view from different positions of the volume holographic grating, thereby enhancing the uniformity of the field of view and the uniformity of the eye movement range. The grating vector of the volume holographic grating varies spatially, but the surface component of the grating vector at different positions remains constant, which ensures the one-to-one correspondence between the input angles and the output angles for different rays, i.e., ensures the accuracy of imaging.

In this embodiment, depending on the number of change directions of the grating vector, the grating vector distribution can be one-dimensional or two-dimensional. The one-dimensional distribution has one change direction, and the two-dimensional distribution has two mutually perpendicular change directions. If the grating vector distribution is a one-dimensional distribution, its change direction is the same as the direction of the surface component of the grating vector r_{xoy}; and if the grating vector distribution is a two-dimensional distribution, one of its two change directions is the same as the direction of the surface component of the grating vector r_{xoy}.

The grating vector distribution of the volume holographic grating described above may be formulated using the method shown in FIG. 3.

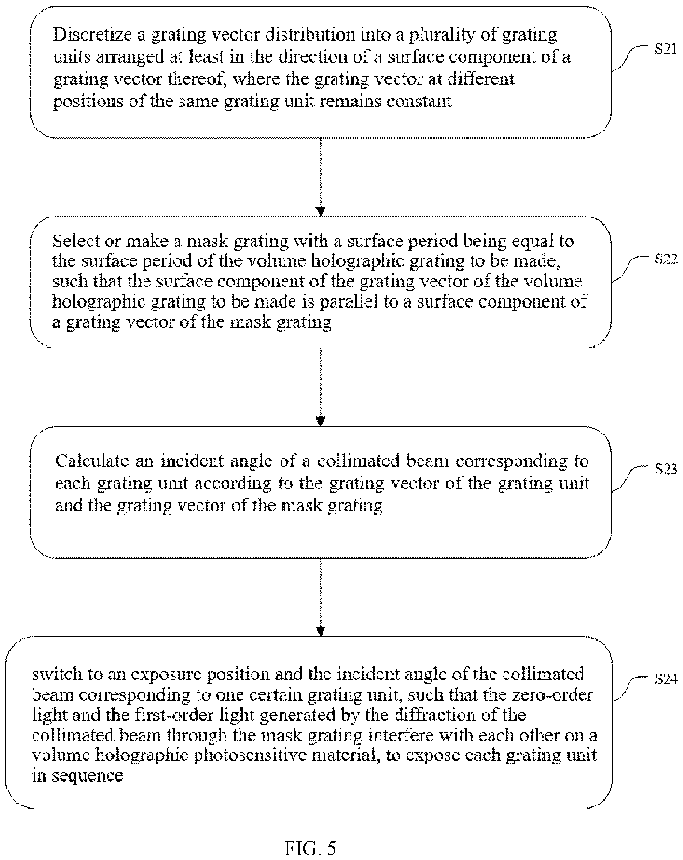

FIG. 5 illustrates a method for manufacturing a volume holographic grating according to an embodiment of the present invention, and the method may be used to manufacture the volume holographic grating shown in FIG. 4. As shown in FIG. 5, the method may include steps S21 to S24.

At S21, a grating vector distribution is discretized into a plurality of grating units u arranged at least in the direction of a surface component r_{xoy} of a grating vector thereof, where the grating vector at different positions of the same grating unit u remains constant.

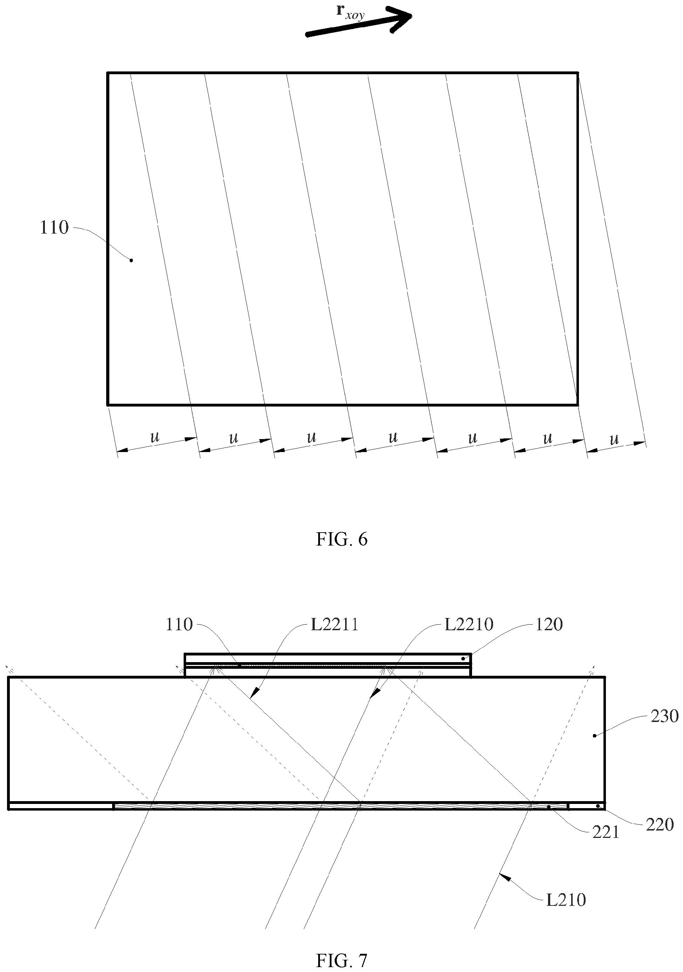

The making of a volume holographic grating with a continuously varying grating vector distribution requires a high-precision exposure apparatus with customized beam shaping elements or customized mask grating, usually with considerably high making difficulty and cost. However, in the present embodiment, the grating vector distribution is discretized into a plurality of grating units u, i.e., the volume holographic grating 110 to be made is discretized into a plurality of grating units u, and the grating vector at different positions of the same grating unit u remains constant, which reduces the making difficulty to a certain extent. In particular, the grating vector distribution can be discretized into one-dimensionally arranged grating units *u* as shown in FIG. 6, or discretized into two-dimensionally arranged grating units *u,* and generally, at least one arrangement direction should be along the direction of the surface component r_{xoy} of the grating vector. For optical waveguide display, one-dimensionally arranged grating units u are generally sufficient to meet the requirement of the field of view. The grating unit *u* needs to be of a suitable length or width, and a larger grating unit *u* length or width is selected for the overall grating angular bandwidth formed by evaluating the grating vector distribution, to facilitate making. Different grating units u may have the same or different lengths or widths. A small amount of overlap b is allowed at the boundary between neighboring grating units u.

At S22, a mask grating with a surface period being equal to the surface period of the volume holographic grating to be made is selected or made, with the surface component r_{xoy} of the grating vector of the volume holographic grating to be made parallel to the surface component r_{xoy} of the grating vector of the mask grating.

According to the diffraction principle, a collimated beam L210 is incident on the mask grating for diffraction, the diffracted zero-order light and the first-order light overlap and interfere with each other on a volume holographic photosensitive material to be exposed, the amplitude of the surface component r_{xoy} of the grating vector of the generated volume holographic grating is equal to the amplitude of the surface component r_{xoy} of the grating vector of the mask grating, therefore, the amplitude of the surface component r_{xoy} of the grating vector of the mask grating should be set to be equal to the amplitude of the surface component r_{xoy} of the grating vector of the volume holographic grating to be made, that is, the surface period of the two is equal.

The mask grating may be specifically an amplitude grating or a phase grating made using photolithography, nanoimprinting, or other micro- and nano-fabrication techniques, or may be a volume holographic grating made in advance by double-beam exposure. The volume holographic grating made by double-beam exposure as a mask grating can substantially reduce the production cost of the mask, but due to the Bragg diffraction properties of the volume holographic grating, its angular bandwidth is small, and the diffraction efficiency is very low at an incident angle away from the Bragg diffraction conditions, thereby not being conductive to making the optical waveguide holographic gratings with a large spatially variable range of the grating vector. The volume holographic grating with a thin thickness as a mask grating can extend the angular bandwidth, thereby extending the spatially variable range of the grating vector of the optical waveguide. Specifically, the thickness of the volume holographic grating used as the mask grating is preferably 1 µm to 5 µm.

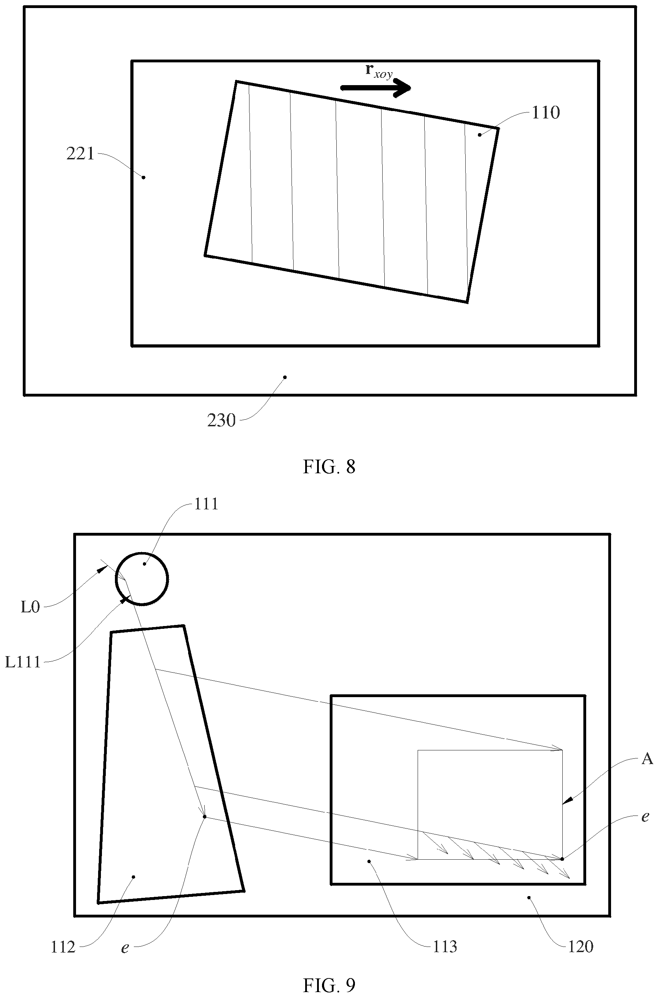

The volume holographic photosensitive material should be placed on the exposure apparatus with the correct orientation before exposure, such that the surface component r_{xoy} of the grating vector of the volume holographic grating to be made is parallel to the surface component r_{xoy} of the grating vector of the mask grating, as shown in FIG. 8.

At S23, an incident angle of the collimated beam L210 corresponding to each grating unit *u* is calculated according to the grating vector of the grating unit *u* and the grating vector of the mask grating.

When the incident angle of the incident collimated beam L210 is changed, the amplitude of the surface component r_{xoy} of the grating vector of the generated volume holographic grating remains unchanged, however, the normal component of the grating vector is correspondingly changed, and the synthesized grating vector is also changed. In this method, volume holographic gratings with spatially varying grating vectors can be made. In order to facilitate the subsequent rapid exposure, according to the grating vector of the grating unit u and the grating vector of the mask grating, the incident angle of the collimated beam L210 corresponding to each grating unit u can be calculated in advance.

At S24, switching is simultaneously performed to an exposure position and the incident angle of the collimated beam L210 corresponding to one certain grating unit u, such that the zero-order light and the first-order light generated by the diffraction of the collimated beam L210 through the mask grating interfere with each other on the volume holographic photosensitive material, to expose each grating unit *u* in sequence.

The regions corresponding to each grating unit u having a specific grating vector can be sequentially exposed, and every time a grating unit u is switched to, the angle of the incident collimated beam L210 needs to be readjusted to a pre-calculated angle according to the corresponding grating vector, so as to generate the corresponding grating vector by exposing at the corresponding grating unit u.

FIG. 7 to FIG. 8 illustrate an apparatus for manufacturing a volume holographic grating according to an embodiment of the present invention, and the apparatus can conduct the method shown in FIG. 5 to make the volume holographic grating 110 shown in FIG. 4. As shown in FIG. 7 to FIG. 8, the apparatus includes a collimated light generating mechanism (not shown in the accompanying drawings), a mask grating 221, and a light-transmitting carrier 230 arranged in sequence, and further includes a first switching mechanism (not shown in the accompanying drawings) and a second switching mechanism (not shown in the accompanying drawings). The light-transmitting carrier 230 is configured to carry a volume holographic photosensitive material. A surface period of the mask grating 221 is the same as a surface period of the volume holographic grating to be made, and a surface component r_{xoy} of a grating vector of the mask grating 221 is parallel to a surface component r_{xoy} of a grating vector of the volume holographic grating 110 to be made. The collimated light generating mechanism is configured to generate a collimated beam L210 that can be incident on the mask grating 221, the collimated beam L210 is diffracted by the mask grating 221 into zero-order light L2210 and one-order light L2211, and the zero-order light L2210 and the one-order light L2211 transmit through the light-transmitting carrier 230 and are subjected to interferential exposure on the volume holographic photosensitive material. It should be noted that if the made volume holographic grating 110 is used for an augmented reality waveguide structure, the light-transmitting carrier 230 may directly carry the augmented reality waveguide structure to be made, i.e., to carry two layers of transparent substrate 120 and a volume holographic photosensitive material arranged between the two layers of substrate, and after interferential exposure, the volume holographic photosensitive material forms a volume holographic grating 110 arranged between the two layers of substrate 120.

The first switching mechanism is configured to switch the exposure position, such that the zero-order light L2210 and the first-order light L2111 just only cover the grating unit *u* to be exposed. The second switching mechanism is configured to switch the incident angle of the collimated beam L210, such that the incident angle of the collimated beam L210 corresponds to the grating unit *u* to be exposed. Since the angles of incident beams exposing each grating unit u are in one-to-one correspondence with the grating vectors, the incident angles of the collimated beam L210 should be switched when the exposure positions are switched, that is, the first switching mechanism and the second switching mechanism must act simultaneously. If the first switching mechanism and the second switching mechanism are both automated mechanisms, the two can act simultaneously, which is beneficial to quickly and sequentially exposing a plurality of grating units u.

The mask grating 221 may specifically be an amplitude grating or a phase grating made using photolithography, nanoimprinting, or other micro- and nano-fabrication techniques, or may be a volume holographic grating (which refers toa second volume holographic grating) made in advance by double-beam exposure. The volume holographic grating made by double-beam exposure as a mask grating 221 can substantially reduce the production cost of the mask 220. However, due to the Bragg diffraction properties of the volume holographic grating, its angular bandwidth is small, and the diffraction efficiency is very low at an incident angle away from the Bragg diffraction conditions, thereby not being conductive to making the optical waveguide holographic gratings with a large spatially variable range of the grating vector. The volume holographic grating with a thin thickness as a mask grating can extend the angular bandwidth, thereby extending the spatially variable range of the grating vector of the optical waveguide. Specifically, the thickness of the volume holographic grating used as the mask grating is preferably 1 µm to 5 µm.

FIG. 9 illustrates an augmented reality waveguide structure. The waveguide structure includes two layers of transparent substrate 120, and a coupling-in grating 111, a deflecting grating 112 and a coupling-out grating 113 arranged between the two layers of substrate 120. The coupling-in grating 111, the deflecting grating 112 and the coupling-out grating 113 all use a volume holographic grating 110 with spatially varied grating vector as mentioned above. It should be understood that the waveguide structure may also be a one-dimensional pupil expansion waveguide that does not include a deflecting grating 112, and one or two of the coupling-in grating 111, the deflecting grating 112 and the coupling-out grating 113 may be selected to employ the above volume holographic grating 110 whose grating vector is spatially varied.

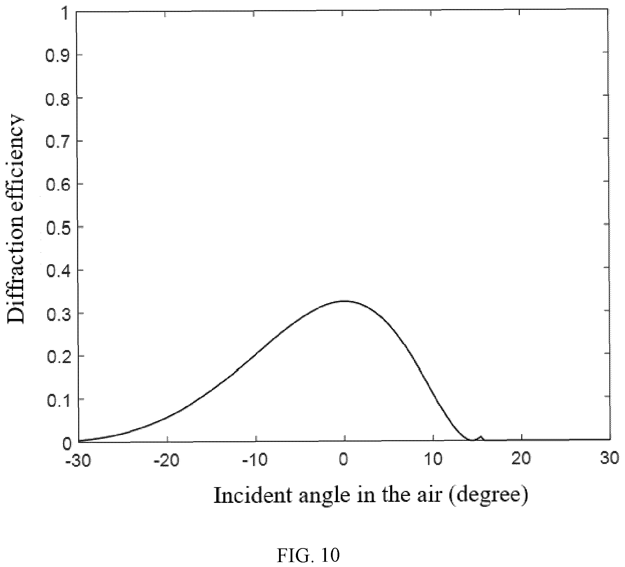

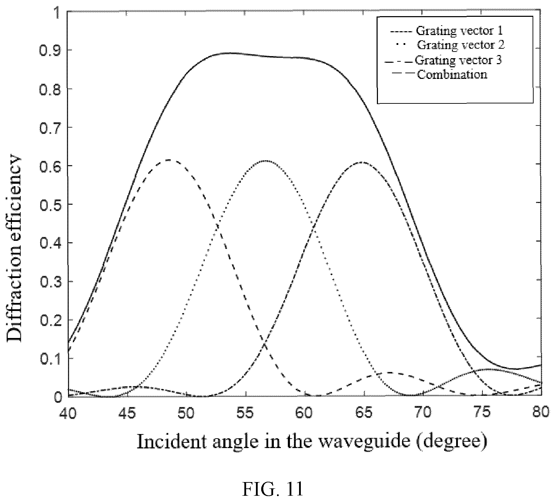

The above invention can extend the angular bandwidth of the volume holographic grating 110, and actually provide different Bragg matching angles that can effectively contribute at different positions of the volume holographic grating 110, which is beneficial to extending the field of view and enhancing the uniformity of the field of view and the uniformity of the eye movement range. Moreover, compared with other methods, the making method and apparatus provided by the above invention have lower complexity and more controllable cost. For example, FIG. 10 shows a possible diffraction efficiency curve of the mask grating 221 as a function of angle, where collimated beams L210 with three incident angles of about -6 degrees, 2.5 degrees, and 10 degrees are selected, three different grating units u are sequentially exposed to obtain a coupling-out grating 113 composed of three grating units u with different grating vectors, the diffraction efficiency curve of the mask grating 221 as a function of angle is shown in FIG. 11, which demonstrates that the combined angular bandwidth is extended.

Apparently, the above embodiments of the present invention are merely examples for the purpose of clearly illustrating the present invention, and are not intended to be a limitation of the implementation of the present invention. Those skilled in the art can make other variations or changes in different forms based on the above description. It is neither necessary nor possible to exhaust all of the embodiments herein. Any modifications, equivalent substitutions and improvements made within the spirit and principles of the present invention shall all fall within the protection scope of the claims of the present invention.

## Claims

1. A method for formulating a grating vector distribution target, comprising steps of:
sampling a plurality of sub-fields of view;
recording a position of an eye movement range effective region of each of the plurality of sub-fields of view, and calculating a grating vector, matching with Bragg diffraction conditions, of a ray of each of the plurality of sub-fields of view;
estimating a grating vector distribution of a volume holographic grating according to the position of the eye movement range effective region of the plurality of sub-fields of view and the grating vector, matching with the Bragg diffraction conditions, of the ray of the plurality of sub-fields of view; and
determining a grating vector distribution of the volume holographic grating according to the estimated grating vector distribution and the principle that a grating vector at a coupling tail end of the eye movement range effective region of each of the plurality of sub-fields of view precisely matches with the Bragg diffraction conditions;
wherein the sub-field of view refers to a collection of rays with the same incident angle that ultimately enter the entire field of view; the eye movement range effective region refers to a region covered by the rays that ultimately enter the eye movement range on the volume holographic grating; and the grating vector distribution has at least one change direction, the at least one change direction is the same as a direction of a surface component of the grating vector, and the surface component of the grating vector at different positions remains constant.

2. The method according to claim 1, wherein the grating vector distribution is a one-dimensional distribution or a two-dimensional distribution.

3. A volume holographic grating, wherein a grating vector distribution of the volume holographic grating is estimated by sampling a position of an eye movement range effective region of a plurality of sub-fields of view and a grating vector, matching with Bragg diffraction conditions, of a ray thereof, and a grating vector at a coupling tail end of the eye movement range effective region of each of the plurality of sub-fields of view precisely matches with the Bragg diffraction conditions; and
wherein the grating vector distribution has at least one change direction, the at least one change direction is the same as a direction of a surface component of the grating vector, and the surface component of the grating vector at different positions remains constant; the sub-field of view refers to a collection of rays having the same incident angle that ultimately enter the entire field of view; and the eye movement range effective region refers to a region covered by the rays that ultimately enter the eye movement range on the volume holographic grating.

4. The volume holographic grating according to claim 3, wherein the grating vector distribution is formulated using the method according to claim 1 or claim 2.

5. The volume holographic grating according to claim 3 or claim 4, wherein the volume holographic grating comprises a coupling-in region, a deflecting region and/or a coupling-out region.

6. A method for manufacturing the volume holographic grating according to any one of claims 3 to 5, comprising steps of:
discretizing a grating vector distribution into a plurality of grating units arranged at least in a direction of a surface component of a grating vector thereof, wherein the grating vector at different positions of the same grating unit remains constant;
selecting or making a mask grating with a surface period being equal to a surface period of the volume holographic grating to be made, such that the surface component of the grating vector of the volume holographic grating to be made is parallel to a surface component of a grating vector of the mask grating;
calculating an incident angle of a collimated beam corresponding to each of the grating units according to the grating vector of the grating unit and the grating vector of the mask grating; and
switching to an exposure position and the incident angle of the collimated beam corresponding to one certain grating unit, such that zero-order light and first-order light generated by diffraction of the collimated beam through the mask grating interfere with each other on a volume holographic photosensitive material, to expose each of the grating units in sequence.

7. The method according to claim 6, wherein the mask grating is an amplitude grating, a phase grating or a volume holographic grating.

8. The method according to claim 6 or claim 7, wherein the mask grating is a volume holographic grating with a thickness of 1 µm to 5 µm.

9. The method according to any one of claims 6 to 8, wherein the grating vector distribution is discretized into a plurality of one-dimensionally or two-dimensionally arranged grating units.

10. An apparatus for manufacturing a volume holographic grating using the method according to any one of claims 6 to 9, comprising a collimated light generating mechanism, a mask grating and a light-transmitting carrier arranged in sequence,
wherein the light-transmitting carrier is configured to carry a volume holographic photosensitive material;
wherein the mask grating has the same surface period as the grating unit, a surface component of a grating vector of the mask grating is parallel to a surface component of a grating vector of the grating unit;
wherein the collimated light generating mechanism is configured to generate a collimated beam capable of being incident on the mask grating, the collimated beam is diffracted by the mask grating into zero-order light and one-order light which pass through the light-transmitting carrier and are subjected to interferential exposure on the volume holographic photosensitive material; and
wherein the apparatus further comprises a first switching mechanism and a second switching mechanism that run simultaneously, wherein the first switching mechanism is configured to switch the exposure position in a way that the zero-order light and the first-order light just only cover the grating unit to be exposed, and the second switching mechanism is configured to switch the incident angle of the collimated beam in a way that the incident angle of the collimated beam corresponds to the grating unit to be exposed.
